# EUROPEAN PATENT SPECIFICATION

(11) **EP 2 272 586 B1**
(45) Date of publication and mention of the grant of the patent: **27.11.2013**
(21) Application number: 10251054.2
(22) Date of filing: 08.06.2010
(51) Int. Cl.: B01J 19/08, B01J 19/24, C01B 3/34, H05H 1/24

(54) **Plasma reactor**
Plasmareaktor
Réacteur à plasma

(30) Priority: 25.06.2009 JP 2009151093
(43) Date of publication of application: 12.01.2011
(73) Proprietor: NGK Insulators, Ltd., Nagoya 467-8530 (JP)
(72) Inventor: Takahashi, Michio, Nagoya City Aichi-ken 467-8530 (JP); Mizuno, Hiroshi, Nagoya City Aichi-ken 467-8530 (JP); Shimizu, Naohiro, Nagoya City Aichi-ken 467-8530 (JP)
(74) Representative: Paget, Hugh Charles Edward

(56) References cited:
- WO-A1-2009/057473
- JP-A- 2008 194 670

## Description

### [Technical Field]

The present invention relates to a plasma reactor that implements a reforming reaction by utilizing plasma generated between a pair of electrodes and a catalyst that promotes a reforming reaction.

### [Background Art]

In recent years, hydrogen has attracted attention as clean energy. A reforming reaction of hydrocarbons contained in gasoline, kerosene, light oil, or the like has been known as a process for producing hydrogen. However, since a temperature as high as 700 to 900°C is generally necessary for reforming hydrocarbons contained in gasoline or the like, the size of a reformer must be increased. Moreover, a large amount of startup energy and a long startup time are required in order to allow a reforming reaction to proceed.

In order to deal with the above problems, technology that applies a pulse voltage or the like between a pair of electrodes to generate plasma, and efficiently implements a reforming reaction at a low temperature by utilizing plasma has been studied. Technology that utilizes plasma has an advantage over related-art methods in that hydrocarbons can be relatively inexpensively reformed at a low temperature and normal pressure. However, the reaction efficiency of the reforming reaction has not necessarily been satisfactory.

Attempts have been made to promote a reforming reaction and improve the reaction efficiency of the reforming reaction by utilizing a catalyst that promotes a reforming reaction when implementing a reforming reaction by utilizing plasma. According to this method, it is considered that a reforming reaction proceeds due to the effect of the catalyst and the effect of plasma.

For example, a hydrocarbon reformer that includes a mixed gas container in which hydrocarbons and steam are mixed, a power supply, and a pair of electrodes provided in the mixed gas container, wherein a voltage having a specific pulse frequency is applied to the pair of electrodes to generate plasma, and a conversion reaction to produce hydrogen is effected by utilizing plasma, has been disclosed (see Patent Document 1). Patent Document 1 describes that the conversion reaction is promoted by filling the mixed gas container with a particulate catalyst (packed bed method).

A fuel reformer that includes a reactor, a pair of needle-like electrodes disposed opposite to each other in the reactor, a voltage application device, a particulate oxide catalyst, and a catalyst supporting means that supports the oxide catalyst in the reactor, has also been disclosed (see Patent Document 2).

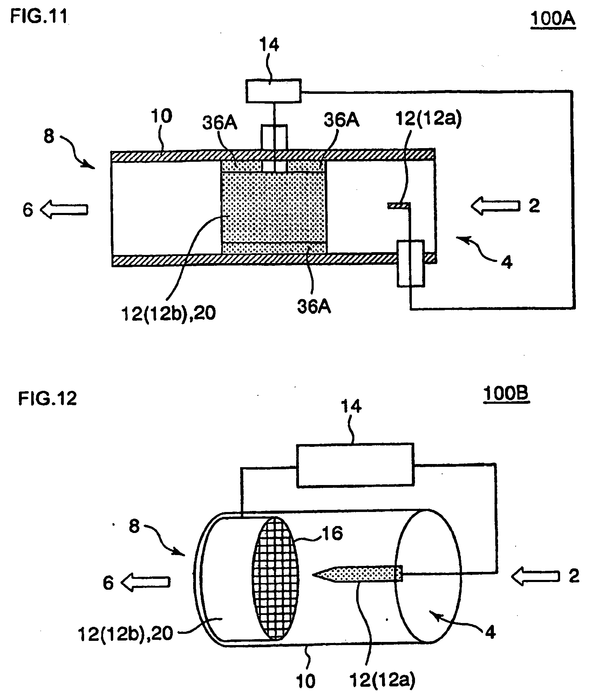

The inventors of the present invention proposed a plasma reactor 100B shown in FIG. 12 that includes a reaction container 10 that has an inlet 4 for a reforming target gas 2 and an outlet 8 for a reformed gas 6, a pair of electrodes 12, and a pulse power supply 14, wherein one of the pair of electrodes 12 is a honeycomb electrode 12b that is formed of a conductive ceramic, and a catalyst is supported on a partition wall of a honeycomb structure 20 constituting honeycomb electrode 12b that defines a plurality of cells 16 (see Patent Document 3).

### [Prior Art Document]

### [Patent Document]

[Patent Document 1] JP-A-2004-345879
[Patent Document 2] JP-A-2006-56748
[Patent Document 3] WO 2009/057473

### [Disclosure of the Invention]

Since the hydrocarbon reformer, etc., disclosed in Patent Document 1 or 2 utilizes the catalyst in addition to plasma generated by a discharge, promotion of the reforming reaction and an increase in the reaction efficiency of the reforming reaction can be expected.

However, since the hydrocarbon reformer, etc., disclosed in Patent Document 1 or 2 utilizes the particulate catalyst, the catalyst particles come in point-contact with each other so that heat transfer between the catalyst particles becomes poor. This decreases the reforming reaction startup capability. When using the packed bed method, the reforming target gas passes through the space between the catalyst particles provided in the reactor. Therefore, the packed bed method can be used only when the space velocity of the reforming target gas is several thousand h⁻¹ or less. This makes it difficult to increase the reforming target gas processing rate. Therefore, a large amount of reformed gas (hydrogen) cannot be produced.

On the other hand, the plasma reactor disclosed in Patent Document 3 solves the above problems by causing the catalyst to be supported on the partition wall of the honeycomb electrode, and achieves various excellent effects (e.g., an improvement in the reaction efficiency of the reforming reaction, an increase in the amount of reformed gas produced, a reduction in power consumption, and an increase in electrode service life).

Although the plasma reactor disclosed in Patent Document 3 achieves various excellent effects, the plasma reactor disclosed in Patent Document 3 must be further improved from the viewpoint of occurrence of electrical noise due to a plasma discharge, a decrease in reforming efficiency, and a deterioration in the honeycomb electrode.

The present invention was conceived in view of the above problems. An object of the present invention is to provide a plasma reactor that can suppress occurrence of electrical noise due to a plasma discharge, a decrease in reforming efficiency, and a deterioration in the honeycomb electrode while maintaining the excellent effects of the plasma reactor disclosed in Patent Document 3.

The inventors conducted extensive studies in order to solve the above problems. As a result, the inventors found that the above problems can be solved by forming a concave surface in the end face of the honeycomb electrode of the plasma reactor opposite to the electrode that makes a pair with the honeycomb electrode. This finding has lead to the completion of the present invention. Specifically, the present invention provides the following plasma reactor.
[1] A plasma reactor comprising a reaction container that has an inlet for a reforming target gas and an outlet for a reformed gas, a pair of electrodes that generate plasma and are disposed opposite to each other in an inner space of the reaction container, a pulse power supply that applies a voltage between the pair of electrodes, and a catalyst that promotes a reforming reaction of the reforming target gas, one of the pair of electrodes being a honeycomb electrode that is formed of a conductive ceramic and includes a plurality of cells that are defined by a partition wall and serve as a gas passage, the other of the pair of electrodes being an opposite electrode that is disposed opposite to an end face of the honeycomb electrode, the catalyst being supported on the partition wall of the honeycomb electrode, and a concave surface being formed in a center area of the end face of the honeycomb electrode that is opposite to the opposite electrode.
[2] The plasma reactor according to [1], wherein a peripheral area of the end face of the honeycomb electrode that is opposite to the opposite electrode is formed tabularly, and the concave surface is formed in the center area of the end face of the honeycomb electrode.
[3] The plasma reactor according to [1] or [2], wherein the opposite electrode has a convex surface at an end thereof.
[4] The plasma reactor according to [3], wherein the convex surface of the opposite electrode has the same curvature as that of the concave surface of the honeycomb electrode.
[5] A plasma reactor comprising a reaction container that has an inlet for a reforming target gas and an outlet for a reformed gas, a pair of electrodes that generate plasma and are disposed opposite to each other in an inner space of the reaction container, a pulse power supply that applies a voltage between the pair of electrodes, and a catalyst that promotes a reforming reaction of the reforming target gas, one of the pair of electrodes being a honeycomb electrode that is formed of a conductive ceramic and includes a plurality of cells that are defined by a partition wall and serve as a gas passage, the other of the pair of electrodes being an opposite electrode that is disposed opposite to an end face of the honeycomb electrode, the catalyst being supported on the partition wall of the honeycomb electrode, and the honeycomb electrode being electrically connected to the pulse power supply through a sheet-like conductive member that is formed of a metal and is disposed to come in contact with an outer circumferential surface of the honeycomb electrode.
[6] The plasma reactor according to [5], wherein the sheet-like conductive member is formed of Cu or a Cu alloy.
[7] The plasma reactor according to any one of [1] to [6], wherein the opposite electrode is formed of a conductive ceramic.
[8] The plasma reactor according to any one of [1] to [7], wherein the honeycomb electrode is provided with an auxiliary electrode that is formed of a metal or an alloy and protrudes from the center area of the end face of the honeycomb electrode opposite to the opposite electrode toward the opposite electrode, the auxiliary electrode being disposed so that part of the auxiliary electrode is embedded in the honeycomb electrode and a remainder of the auxiliary electrode protrudes from the end face of the honeycomb electrode.
[9] The plasma reactor according to [8], further comprising at least a pair of opposite electrodes that are disposed on either side of the honeycomb electrode as the opposite electrode, and at least a pair of auxiliary electrodes that respectively protrude toward a corresponding opposite electrode of the pair of opposite electrodes as the auxiliary electrode.
[10] The plasma reactor according to [9], wherein the auxiliary electrode is disposed to pass through the honeycomb electrode so that each end of the auxiliary electrode protrudes respectively from each end face of the honeycomb electrode.
[11] The plasma reactor according to any one of [1] to [10], further comprising a blocking member that is formed of an insulating material and blocks inflow of the reforming target gas that has passed through an area other than a plasma generation area, the blocking member protruding into a space between the opposite electrode and the honeycomb electrode so that an outer circumferential area of a gas-introducing end face of the honeycomb electrode is covered.
[12] The plasma reactor according to [11], wherein the blocking member is formed of an insulating ceramic.
[13] The plasma reactor according to any one of [1] to [12], wherein the honeycomb electrode is formed of a conductive ceramic that includes silicon carbide.
[14] The plasma reactor according to any one of [1] to [13], wherein the pulse power supply is a high-voltage pulse power supply that utilizes a static induction thyristor.

The plasma reactor according to the present invention can suppress occurrence of electrical noise due to a plasma discharge, a decrease in reforming efficiency, and a deterioration in the honeycomb electrode.

### [Brief Description of the Drawings]

[FIG. 1] FIG. 1 is a cross-sectional view schematically showing a plasma reactor according to one embodiment of the present invention.
[FIG. 2] FIG. 2 is a cross-sectional view schematically showing a plasma reactor according to another embodiment of the present invention.
[FIG. 3] FIG. 3 is a cross-sectional view schematically showing a plasma reactor according to still another embodiment of the present invention.
[FIG. 4] FIG. 4 is a cross-sectional view schematically showing a plasma reactor according to still another embodiment of the present invention.
[FIG. 5] FIG. 5 is a cross-sectional view schematically showing a plasma reactor according to still another embodiment of the present invention.
[FIG. 6] FIG. 6 is a cross-sectional view schematically showing a plasma reactor according to still another embodiment of the present invention.
[FIG. 7] FIG. 7 is a cross-sectional view schematically showing a plasma reactor according to still another embodiment of the present invention.
[FIG. 8] FIG. 8 is a cross-sectional view schematically showing a plasma reactor according to still another embodiment of the present invention.
[FIG. 9] FIG. 9 is a cross-sectional view schematically showing a plasma reactor according to still another embodiment of the present invention.
[FIG. 10] FIG. 10 is a cross-sectional view schematically showing a plasma reactor according to yet another embodiment of the present invention.
[FIG. 11] FIG. 11 is a cross-sectional view schematically showing one embodiment of a related-art plasma reactor.
[FIG. 12] FIG. 12 is a cross-sectional view schematically showing another embodiment of a related-art plasma reactor.

1A, 1B, 1C, 1D, 1E, 1F, 1G, 1H, 1I, 1J, 100A, 100B: plasma reactor, 2: reforming target gas, 4: inlet, 6: reformed gas, 8: outlet, 10: reaction container, 12: electrode, 12a, 12c: opposite electrode, 12b: honeycomb electrode, 14: pulse power supply, 16: cell, 20: honeycomb structure, 30A, 30B: concave surface, 32: convex surface, 34: sheet-like conductive member, 36A, 36B: insulating member, 38A, 38B: auxiliary electrode, 40: blocking member

### [Embodiments of the Invention]

Embodiments of the plasma reactor according to the present invention are described below. Note that the present invention encompasses a wide range of plasma reactors that include matters that specify the present invention, and is not limited to the following embodiments.

### [1] Plasma reactor according to first embodiment of the present invention:

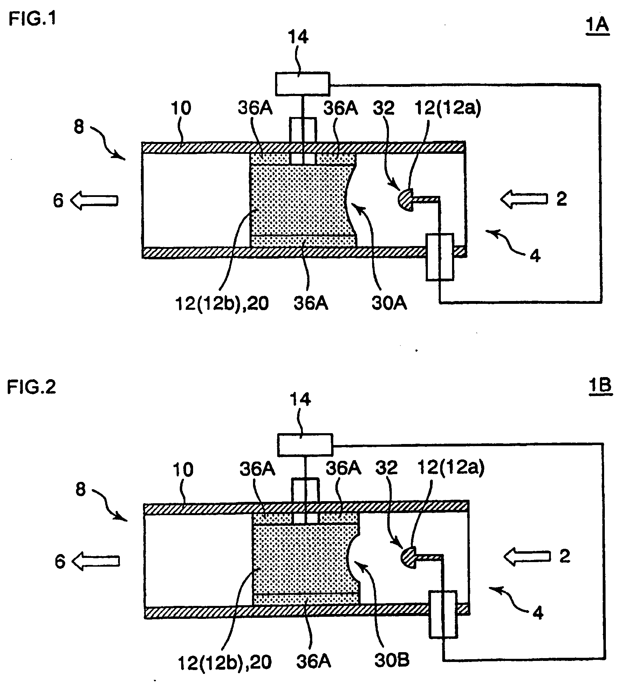

A plasma reactor 1A shown in FIG. 1 that has a basic configuration of the plasma reactor according to the present invention includes a reaction container 10 that has an inlet 4 for a reforming target gas 2 and an outlet 8 for a reformed gas 6, a pair of electrodes 12 that generate plasma and are disposed opposite to each other in an inner space of the reaction container 10, a pulse power supply 14 that applies a voltage between the pair of electrodes 12, and a catalyst that promotes a reforming reaction of the reforming target gas 2, one of the pair of electrodes 12 being a honeycomb electrode 12b that is formed of a conductive ceramic and includes a plurality of cells that are defined by a partition wall and serve as a gas passage, the other of the pair of electrodes 12 being an opposite electrode 12a that is disposed opposite to an end face of the honeycomb electrode 12b, and the catalyst being supported on the partition wall of the honeycomb electrode 12b.
In the plasma reactor, like the plasma reactor 1A shown in FIG. 1, according to the first embodiment of the present invention, a concave surface 30A is formed in a center area of the end face of the honeycomb electrode 12b that is opposite to the opposite electrode 12a.

The difference between the discharge distance from the end of the opposite electrode to the center area of the end face of the honeycomb electrode and the discharge distance from the end of the opposite electrode to the peripheral area of the end face of the honeycomb electrode is reduced by forming the concave surface in the center area of the end face of the honeycomb electrode. Specifically, a uniform discharge distance is achieved over the entire end face of the honeycomb electrode. This suppresses local concentration of plasma and spreads plasma so that the interaction between the reforming target gas and plasma increases. This makes it possible to promote the reforming reaction. Moreover, electrical noise due to local concentration of plasma decreases by suppressing local concentration of plasma. Therefore, occurrence of electrical noise due to a plasma discharge and a decrease in reforming efficiency can be suppressed.

### [1-1] Concave surface:

The term "concave surface" refers to a surface that is curved inwardly. Specifically, a curved depression is formed in the end face of the honeycomb electrode used in the first embodiment. Examples of the shape of the concave surface include a paraboloid and the like. It is preferable to form one concave surface in one end face of the honeycomb electrode so that the deepest area is formed at the center of the end face of the honeycomb electrode.

The depth of the deepest area of the concave surface is preferably 1 to 5 mm from the viewpoint of increasing the interaction between the reforming target gas and plasma. If the depth of the deepest area of the concave surface is less than 1 mm, a uniform discharge distance may not be achieved. If the depth of the deepest area of the concave surface is more than 5 mm, the reforming efficiency may decrease due to a decrease in the interaction between the reforming target gas and plasma.

The curvature of the concave surface is not particularly limited, but is preferably R10 to R30 from the viewpoint of achieving a uniform discharge distance over the entire end face of the honeycomb electrode. If the curvature of the concave surface is less than R10, local concentration of plasma may occur so that the reforming reaction of the reforming target gas may proceed to only a small extent. If the curvature of the concave surface is more than R30, local concentration of plasma may likely occur so that the reforming reaction of the reforming target gas may again proceed to only a small extent. The concave surface may be formed by machining the end face of the honeycomb electrode along a spherical surface of a sphere that has a radius defined by a straight line that connects the end of the opposite electrode and the deepest area of the concave surface, for example.

Note that the expression "the concave surface is formed in the center area of the end face" used herein means that the concave surface is formed in at least the center area of the end face of the honeycomb electrode, and includes a case where the concave surface 30A is formed over the entire end face of the honeycomb electrode 12b including the center area as shown in FIG. 1.

In the plasma reactor, like a plasma reactor 1B shown in FIG. 2, according to the present invention, it is preferable that the peripheral area of the end face of the honeycomb electrode 12b that is opposite to the opposite electrode 12a be formed tabularly, and a concave surface 30B be formed in the center area of the end face of the honeycomb electrode 12b. Specifically, it is preferable that the concave surface 30B be formed in only the center area of the end face of the honeycomb electrode 12b, like the plasma reactor 1B shown in FIG. 2, instead of forming the concave surface 30A over the entire end face of the honeycomb electrode 12b, like the plasma reactor 1A shown in FIG. 1.

The above structure ensures that an electron flow path increases at the end face of the honeycomb electrode, so that local concentration of a plasma discharge at the end face of the honeycomb electrode is suppressed. Therefore, occurrence of electrical noise due to a plasma discharge and a decrease in reforming efficiency can be suppressed. It is preferable to form the tabular area (i.e., an area other than the concave surface) in the peripheral area of the end face of the honeycomb electrode so that the tabular area has a width of 1 to 5 mm from the outer edge of the end face of the honeycomb electrode. In other words, the concave surface may be formed to be surrounded by an area that has a width of 1 to 5 mm from the outer edge of the end face of the honeycomb electrode. If the width of the tabular area is less than 1 mm, local electron concentration may occur in the tabular area due to an increase in edge effect. Moreover, the plasma discharge area may not spread. If the width of the tabular area is more than 5 mm, the reforming reaction of the reforming target gas may proceed to only a small extent due to a decrease in area of the concave surface (i.e., plasma discharge irradiation area).

### [1-2] Opposite electrode:

In the first embodiment, like the plasma reactor 1A shown in FIG. 1, it is preferable that the end of the opposite electrode 12a be formed in the shape of a convex surface 32. This structure improves the effect of achieving a uniform discharge distance between the end face of the honeycomb electrode and the opposite electrode in combination with the configuration of forming the concave surface in the end face of the honeycomb electrode.

The form of the convex surface is not particularly limited. For example, the convex surface may be formed by chamfering or rounding the end of a linear electrode or a rod-like electrode. In the first embodiment, the opposite electrode preferably has a match shape in which the end of the opposite electrode is provided with a sphere or an oval sphere having an outer diameter larger than that of the end of the opposite electrode, a mushroom shape in which the end of the opposite electrode is provided with a cap such as a hemisphere or an oval hemisphere, or the like.

The above configuration enables formation of a convex surface having a large outer diameter and a large surface area as compared with the case of forming the convex surface by chamfering or rounding the end of a linear electrode or a rod-like electrode, so that the effect of achieving a uniform discharge distance between the end face of the honeycomb electrode and the opposite electrode can be improved. The opposite electrode 12a of the plasma reactor 1A shown in FIG. 1 is an example in which the end of the opposite electrode is provided with a cap in the shape of an oval hemisphere (mushroom shape).

In the first embodiment, it is preferable that the convex surface of the opposite electrode have the same curvature as that of the concave surface of the honeycomb electrode. This further improves the effect of achieving a uniform discharge distance between the end face of the honeycomb electrode and the opposite electrode. It is preferable that the convex surface of the opposite electrode have a curvature of R10 to R30 that is equal to the preferable curvature of the concave surface of the honeycomb electrode.

In the first embodiment, like the plasma reactor 1A shown in FIG. 1, it is preferable that the opposite electrode 12a be formed of a conductive ceramic. An opposite electrode formed of a metal has been widely used. Occurrence of electrical noise due to a plasma discharge and a decrease in reforming efficiency can be suppressed by forming the opposite electrode using a conductive ceramic in the same manner as the honeycomb electrode. It is preferable that the opposite electrode be formed of the same conductive ceramic as that of the honeycomb electrode. It is more preferable that the opposite electrode and the honeycomb electrode be formed of silicon carbide. This configuration is also effective for a second embodiment described later.

### [2] Plasma reactor according to second embodiment of the present invention:

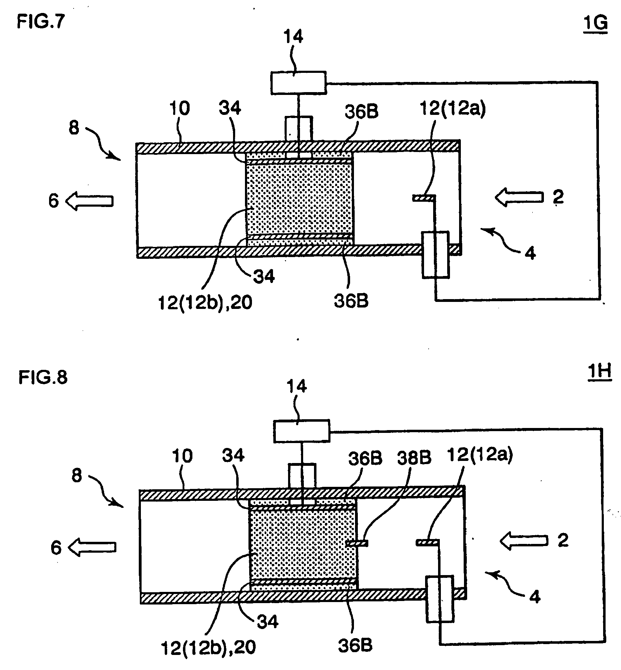

A plasma reactor, like a plasma reactor 1G shown in FIG. 7, according to a second embodiment of the present invention has the same basic configuration as that of the plasma reactor according to the first embodiment, but differs from the plasma reactor according to the first embodiment in that the honeycomb electrode 12b is electrically connected to the pulse power supply 14 through a sheet-like conductive member 34 that is formed of a metal and is disposed to come in contact with the entire outer circumferential surface of the honeycomb electrode 12b.

A honeycomb electrode and a pulse power supply have been normally connected electrically using a needle-like conductive member. In the second embodiment, since the honeycomb electrode and the pulse power supply are connected through the sheet-like conductive member, a voltage is applied to the entire outer circumferential surface of the honeycomb electrode so that a situation in which a voltage concentrates at part of the honeycomb electrode can be effectively prevented. Therefore, concentration of the flow of electrons does not occur in the honeycomb electrode so that local plasma generation is suppressed. This makes it possible to reduce damage sustained by the honeycomb electrode due to local plasma generation. Therefore, since a deterioration in the honeycomb electrode can be suppressed, the service life of the honeycomb electrode can be increased. Moreover, occurrence of electrical noise due to a plasma discharge and a decrease in reforming efficiency can be suppressed. This configuration is also effective for the first embodiment.

### [2-1] Sheet-like conductive member:

The term "sheet-like conductive member" used herein refers to a member that comes in contact with the outer circumferential surface of the honeycomb electrode at a plurality of points or along a surface to provide electrical connection, differing from a needle-like member that comes in contact with the honeycomb electrode at a single point to provide electrical connection. Examples of the sheet-like conductive member include a sheet, a film, a mat, a mesh (net), etc., formed of a conductive material.

It suffices that the sheet-like conductive member be formed of a conductive material. It is preferable that the sheet-like conductive member be formed of a metal or an alloy that exhibits high conductivity. Examples of a metal that exhibits high conductivity include stainless steel, nickel, copper, aluminum, iron, and the like. Examples of an alloy that exhibits high conductivity include an aluminum-copper alloy, a titanium alloy, a nickel alloy (e.g., Inconel (manufactured by Nilaco Corporation), and the like. It is preferable that the sheet-like conductive member be formed of copper or a copper alloy due to low cost and excellent handling capability. Examples of the copper alloy include an aluminum-copper alloy and the like. More specifically, a tape formed of copper, a wire mesh formed of copper, or the like may be suitably used as the sheet-like conductive member.

### [2-2] Insulating member:

In the second embodiment, since the sheet-like conductive member is disposed to come in contact with the entire outer circumferential surface of the honeycomb electrode, it is preferable to dispose the sheet-like conductive member in the reaction container 10 through an insulating member 36 that is formed of an insulating material from the viewpoint of preventing a short circuit with the reaction container (normally formed of a metal or an alloy) like the plasma reactor 1G shown in FIG. 7.

An insulating ceramic may be suitably used as the insulating material. For example, alumina, zirconia, silicon nitride, aluminum nitride, sialon, mullite, silica, cordierite, or the like is preferably used. These ceramics may be used either individually or in combination.

The form of the insulating member is not particularly limited. For example, the honeycomb electrode may be held using a ceramic block as the insulating member, and disposed in the reaction container. In the second embodiment, it is preferable to cover (wrap) the honeycomb electrode with a ceramic mat as the insulating member, and dispose the honeycomb electrode in the reaction container. This configuration provides a compact structure that exhibits high impact resistance as compared with the case of using a ceramic block, and may be suitably used for in-car applications and the like.

The type of ceramic mat is not particularly limited. For example, a ceramic mat that is formed by tangling ceramic fibers and has a thickness of 1 to 5 mm and a basis weight of 100 to 150 g/m² may be suitably used.

### [3] Basic configuration of plasma reactor according to the present invention:

The first embodiment and the second embodiment, like the plasma reactor 1A shown in FIG. 1, are identical as to the basic configuration that includes the honeycomb electrode 12b, the opposite electrode 12a, the catalyst, the reaction container 10, the pulse power supply 14, an auxiliary electrode, a blocking member, and the like as constituent members. Each constituent member of the configuration that is common to the first embodiment and the second embodiment is described below.

### [3-1] Honeycomb electrode:

In the plasma reactor according to the present invention, the pair of electrodes 12 are disposed opposite to each other in the inner space of the reaction container 10, as shown in FIG. 1. Plasma is generated by applying a voltage between the pair of electrodes 12. In the plasma reactor according to the present invention, one of the pair of electrodes 12 is the honeycomb electrode 12b, as shown in FIG. 1.

The term "honeycomb electrode" used herein refers to an electrode having a honeycomb structure that is formed of a conductive ceramic and includes a plurality of cells that are defined by a partition wall and serve as a gas passage. Specifically, the honeycomb electrode is a honeycomb structure formed of a conductive ceramic.

In the plasma reactor according to the present invention, it is preferable that the honeycomb electrode have an external shape (overall shape) such that the ratio of the maximum outer diameter of the cell open end face of the honeycomb electrode to the length of the honeycomb electrode in the cell formation (extension) direction is 0.50 to 1.2. Specifically, it is preferable to form the honeycomb electrode to extend in the depth direction. This increases the contact time (i.e., reaction time) of the reforming target gas and the catalyst so that the reforming reaction is further promoted due to the effects of the catalyst and an increase in the amount of heat of reaction generated inside the cells. Specifically, the reaction efficiency of the reforming reaction is improved. It is more preferable to set the above ratio within the range of 0.50 to 1.0 in order to more reliably achieve the above effects.

The length of the honeycomb electrode in the cell formation direction is preferably 25 to 60 mm, and more preferably 30 to 60 mm. If the length of the honeycomb electrode is less than 25 mm, the contact time of the reforming target gas and the catalyst may be insufficient, so that most of the hydrocarbons contained in the reforming target gas flow out from the reaction container without being reformed. If the length of the honeycomb electrode is more than 60 mm, the contact time of the reforming target gas and the catalyst increases. However, a pressure loss may increase when the reforming target gas passes through the cells of the honeycomb electrode, so that the space velocity when processing the reforming target gas may decrease. Moreover, the heat of reaction may not reach the end of the honeycomb electrode, so that an increase in reaction efficiency due to an increase in temperature of the honeycomb electrode may not be obtained.

The maximum outer diameter of the cell open end face of the honeycomb electrode is preferably 25 to 35 mm, and more preferably 27 to 33 mm. If the maximum outer diameter of the cell open end face of the honeycomb electrode is less than 25 mm, a pressure loss may increase. If the maximum outer diameter of the cell open end face of the honeycomb electrode is more than 35 mm, a large amount of power may be required to generate plasma. Moreover, the honeycomb electrode may be melted.

The term "maximum outer diameter" used herein refers to the length of the longest straight line among straight lines that connect two points at the outer circumferential surface of the cell open end face of the honeycomb electrode. For example, when the cell open end face of the honeycomb electrode is circular, the maximum outer diameter is equal to the diameter of the circle. When the cell open end face of the honeycomb electrode is rectangular, the maximum outer diameter is equal to the length of the diagonal lines of the rectangle.

A specific configuration of the honeycomb structure is not particularly limited. A known honeycomb structure may be employed. For example, the shape (i.e., the cross-sectional shape along the direction perpendicular to the cell formation direction) of the cells may be appropriately selected from a circle, an oval, a triangle, a quadrangle, a hexagon, another polygonal shape, and the like. Part of the openings of the cells may be plugged.

The cell density (i.e., the number of cells per unit cross-sectional area) of the honeycomb electrode is preferably 4 to 192 cells/cm² (25 to 1200 cells/in²). If the cell density is less than 4 cells/cm² (25 cells/in²), the reformed gas may pass through the cells of the honeycomb electrode before utilizing the heat of reaction generated in the cells, so that the contact time (i.e., reaction time) of the reforming target gas and the catalyst supported on the partition wall may decrease. Therefore, the effect of the catalyst may not be sufficiently utilized, so that the reforming reaction may not be sufficiently promoted.

If the cell density is more than 192 cells/cm² (1200 cells/in²), the contact time of the reforming target gas and the catalyst increases. However, a pressure loss may increase when the reforming target gas passes through the cells of the honeycomb electrode, so that the space velocity when processing the reforming target gas may decrease. Moreover, the heat of reaction may not reach the end of the honeycomb electrode, so that an increase in reaction efficiency due to an increase in temperature of the honeycomb electrode may not be obtained.

As mentioned above, when the honeycomb electrode extends in the depth direction, a pressure loss may increase depending on the depth of the honeycomb electrode. In this case, a pressure loss can be reduced by reducing the cell density of the honeycomb electrode. When the honeycomb electrode has a small depth, the contact time (i.e., reaction time) of the reforming target gas and the catalyst supported on the partition wall can be increased by increasing the cell density of the honeycomb electrode, so that the effect of the catalyst can be sufficiently utilized.

The thickness of the partition wall (wall thickness) is not particularly limited, and may be appropriately designed depending on the objective. The wall thickness is preferably 50 µm to 2 mm, and more preferably 60 to 500 µm, for example. A wall thickness within the above range is suitable when producing hydrogen by reforming hydrocarbons. If the wall thickness is less than 50 µm, the mechanical strength of the honeycomb electrode may decrease, so that breakage may occur due to impact or thermal stress caused by a change in temperature. If the wall thickness is more than 2 mm, the cell volume of the honeycomb electrode may decrease, so that a pressure loss may increase to a large extent when the reforming target gas passes through.

The conductive ceramic that forms the honeycomb electrode is preferably silicon carbide. Note that the entire honeycomb electrode need not necessarily be formed of silicon carbide as long as the honeycomb electrode exhibits conductivity. Specifically, the honeycomb electrode of the plasma reactor according to the present invention is preferably formed of a conductive ceramic that includes silicon carbide. The content of silicon carbide in the honeycomb electrode is preferably 50 mass% or more, and more preferably 60 mass% or more, in order to prevent a decrease in conductivity.

The honeycomb electrode is preferably a porous body having a porosity of 30 to 60%, and more preferably 40 to 50%. If the porosity of the honeycomb electrode is less than 30%, a micro-discharge effect in the space between the ceramic particles may be insufficient. If the porosity of the honeycomb electrode is more than 60%, a decrease in strength of the partition wall, etc. may occur. The porosity of the honeycomb electrode may be appropriately adjusted for densification by impregnating a ceramic fired body with silicon, for example.

The honeycomb electrode is preferably a porous body having a density of 0.5 to 4.0 g/cm³, and more preferably 1.0 to 3.0 g/cm³. If the density of the honeycomb electrode is less than 0.5 g/cm³, the strength of the honeycomb electrode may be insufficient, so that the honeycomb electrode may break due to impact. If the density of the honeycomb electrode is more than 4.0 g/cm³, it may be difficult to process the honeycomb electrode during production, so that the production cost may increase.

It is preferable that the honeycomb electrode have an electrical resistance of 2 Ω or less, and more preferably 0.3 Ω or less at a temperature of 180°C and an applied voltage of 3.5 V, from the viewpoint of ensuring conductivity. In order to achieve such an electrical resistance, it is preferable to use silicon carbide as the conductive ceramic, and mix metallic silicon with silicon carbide, or form a silicon carbide-metallic silicon composite, for example.

The term "electrical resistance" used herein refers to a value determined by measuring the electrical resistance of a rectangular parallelepiped sample (length: 3.3 cm, cross-sectional area: 1.1 cm² (i.e., cross-sectional area along the direction perpendicular to the gas flow direction)) obtained by cutting the honeycomb electrode along the gas flow direction (cell formation direction) by a constant-current four-terminal method using a direct-current power supply at a temperature of 180°C and a voltage terminal distance of 2.3 cm.

It is preferable that the honeycomb electrode have a thermal conductivity of 5 to 300 W/mK, more preferably 10 to 200 W/mK, and particularly preferably 20 to 100 W/mK, from the viewpoint of activating the catalyst supported on the honeycomb electrode. If the thermal conductivity of the honeycomb electrode is less than 5 W/mK, it may take time to activate the catalyst supported on the honeycomb electrode. If the thermal conductivity of the honeycomb electrode is more than 300 W/mK, heat radiation to the outside may increase so that the catalyst supported on the honeycomb electrode may not be sufficiently activated. Examples of a conductive ceramic having a thermal conductivity within the above range include silicon carbide and the like.

The honeycomb electrode is preferably disposed so that the electrode-to-electrode distance between the opposite electrode and the end face of the honeycomb electrode opposite to the opposite electrode is 1 to 30 mm, and more preferably 5 to 10 mm. If the electrode-to-electrode distance is less than 1 mm, a short circuit may easily occur due to electric field concentration. Moreover, the amount of hydrogen produced by the reforming reaction of hydrocarbons may decrease although a plasma discharge occurs between the electrodes. If the electrode-to-electrode distance is more than 30 mm, a plasma discharge may become unstable so that the plasma generation efficiency may decrease.

### [3-2] Opposite electrode:

As shown in FIG. 1, the plasma reactor according to the present invention includes the opposite electrode 12a that makes a pair with the honeycomb electrode 12b. The term "opposite electrode" used herein includes a match-shaped electrode, a mushroom-shaped electrode, a linear or sheet-shaped electrode that protrudes in one direction, and an electrode obtained by bending the above electrode. For example, the opposite electrode may have a linear shape (e.g., needle-like electrode, rod-like electrode, or tabular (strip-shaped) electrode), a bent shape (L-shape), or the like. A solderless terminal, a terminal that has a wide end in the same manner as a solderless terminal, a cylindrical terminal, or the like may also be used as the opposite electrode. Note that at least one opposite electrode is disposed.

The length of the opposite electrode is preferably 3 to 50 mm, and more preferably 5 to 30 mm, in order to reduce the size of the plasma reactor. If the length of the opposite electrode is less than 3 mm, handling of the opposite electrode may become unstable when producing the plasma reactor, so that it may be difficult to secure the opposite electrode. If the length of the opposite electrode is more than 50 mm, the opposite electrode may be curved (bent) due to contact with the flow of the reforming target gas.

When the opposite electrode is a needle-like electrode or a rod-like electrode, the outer diameter of the opposite electrode is preferably 0.1 to 5 mm, and more preferably 0.5 to 3 mm. If the outer diameter of the opposite electrode is less than 0.1 mm, the opposite electrode may be curved (bent) due to contact with the flow of the reforming target gas. As a result, a plasma discharge may become unstable. If the outer diameter of the opposite electrode is more than 5 mm, it may be difficult to control a plasma discharge.

It is preferable that the opposite electrode be formed of a highly conductive material (e.g., the metal or alloy illustrated in connection with the sheet-like conductive member, or the conductive ceramic illustrated in connection with the first embodiment) from the viewpoint of ensuring conductivity.

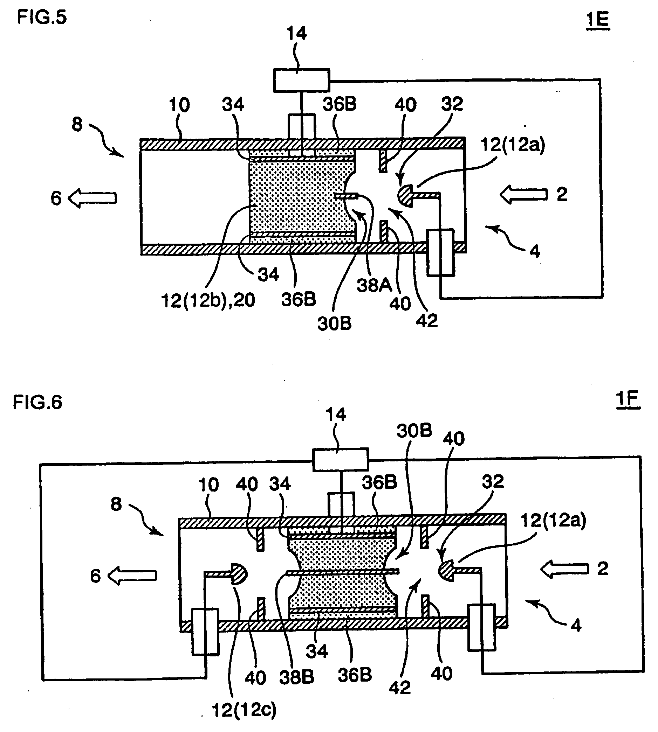

It suffices that plasma reactor according to the present invention include at least one opposite electrode that makes a pair with the honeycomb electrode. The number of opposite electrodes is not limited. In a plasma reactor 1F shown in FIG. 6, for example, one of the pair of electrodes 12 includes at least a pair of opposite electrodes 12a and 12c that is disposed on either side of the honeycomb electrode 12b. According to this configuration, the reforming target gas passes through the plasma space over a long time as compared with a plasma reactor (e.g., plasma reactor 1A shown in FIG. 1) that includes one opposite electrode 12a, so that the reforming reaction proceeds reliably. Therefore, the amount of unreacted hydrocarbons can be reduced so that production of by-products can be suppressed. This makes it possible to increase the hydrogen yield and suppress production of by-products when causing hydrocarbons to undergo a reforming reaction using such a plasma reactor.

### [3-3] Auxiliary electrode:

It is preferable that the plasma reactor according to the present invention include an auxiliary electrode 38A that protrudes from the center area of the end face of the honeycomb electrode 12b opposite to the opposite electrode 12a toward the opposite electrode 12a, the auxiliary electrode 38A being disposed so that part of the auxiliary electrode 38A is embedded in the honeycomb electrode 12b and the remainder protrudes from the end face of the honeycomb electrode 12b.

The above configuration makes it possible to reduce damage given to the honeycomb electrode by introducing a part of the discharge to the auxiliary electrode. Therefore, a deterioration in the honeycomb electrode can be suppressed while maintaining the effects of the honeycomb electrode, so that the service life of the honeycomb electrode can be increased. Moreover, occurrence of electrical noise due to a plasma discharge and a decrease in reforming efficiency can be suppressed.

The metal or alloy illustrated in connection with the opposite electrode may be suitably used as the material for the auxiliary electrode. The shape of the auxiliary electrode is not particularly limited. A needle-like electrode or a rod-like electrode having an outer diameter of 1 to 5 mm may be suitably used as the auxiliary electrode.

It is preferable that the end of the auxiliary electrode protrude from the end face of the honeycomb electrode by 1 to 5 mm from the viewpoint of suppressing a deterioration in the honeycomb electrode while promoting the reforming reaction of the reforming target gas. If the end of the auxiliary electrode protrudes from the end face of the honeycomb electrode by less than 1 mm, a deterioration in the honeycomb electrode may not be suppressed. If the end of the auxiliary electrode protrudes from the end face of the honeycomb electrode by more than 5 mm, the reforming reaction may not be promoted due to a decrease in the interaction between the reforming target gas and the catalyst supported on the honeycomb electrode. As a result, the reforming efficiency may decrease.

It is preferable that an area of the auxiliary electrode that corresponds to 50 to 95% of the total length of the auxiliary electrode be embedded in the honeycomb electrode. If an area of the auxiliary electrode that corresponds to less than 50% of the total length of the auxiliary electrode is embedded in the honeycomb electrode, the auxiliary electrode may be removed from the honeycomb electrode. If an area of the auxiliary electrode that corresponds to more than 95% of the total length of the auxiliary electrode is embedded in the honeycomb electrode, the effect of the auxiliary electrode may be insufficient.

The electrode-to-electrode distance between the auxiliary electrode and the opposite electrode is preferably 1 to 30 mm, and more preferably 5 to 10 mm, for the reasons described in connection with the electrode-to-electrode distance between the honeycomb electrode and the opposite electrode.

It is preferable that the plasma reactor according to the present invention include at least a pair of opposite electrodes that are disposed on either side of the honeycomb electrode, and at least a pair of auxiliary electrodes that respectively protrude toward the corresponding opposite electrode of the pair of opposite electrodes. The above configuration makes it possible to reduce damage given to the honeycomb electrode when providing two opposite electrodes 12a, so that the service life of the honeycomb electrode can be increased.

When employing the above configuration, one auxiliary electrode may be provided on each end face of the honeycomb electrode. Note that it is preferable however that an auxiliary electrode 38B pass through the honeycomb electrode 12b so that each end of the auxiliary electrode 38B protrudes respectively from each end face of the honeycomb electrode 12b like the plasma reactor 1F shown in FIG. 6. This configuration preferably has the good effect of promoting the reforming reaction of the reforming target gas as compared with the case of providing the auxiliary electrode on each end face of the honeycomb electrode.

### [3-4] Catalyst:

The plasma reactor according to the present invention includes the catalyst that promotes the reforming reaction of the reforming target gas, the catalyst being supported on the partition wall of the honeycomb electrode.

The catalyst is not particularly limited insofar as the catalyst exhibits the above catalytic effect. For example, the catalyst may be a substance that includes at least one element selected from the group consisting of a noble metal (e.g., platinum, rhodium, palladium, ruthenium, indium, silver, and gold), aluminum, nickel, zirconium, titanium, cerium, cobalt, manganese, zinc, copper, tin, iron, niobium, magnesium, lanthanum, samarium, bismuth, and barium. A substance that includes the above element may be a metal element, a metal oxide, other compounds (e.g., chloride and sulfate), or the like. These substances may be used either individually or in combination.

The amount of catalyst supported on the honeycomb electrode is preferably 0.05 to 70 g/l, and more preferably 0.1 to 40 g/l. If the amount of catalyst supported on the honeycomb electrode is less than 0.05 g/l, the catalyst may not exhibit a catalytic effect. If the amount of catalyst supported on the honeycomb electrode is more than 70 g/l, the production cost of the plasma reactor may increase.

It is preferable that the catalyst be supported on the partition wall of the honeycomb electrode in the form of catalyst-coated particles (i.e., the catalyst is supported on carrier particles). This improves the reaction efficiency of the reforming target gas with the catalyst. A ceramic powder or the like may be used as the carrier particles. The type of ceramic is not particularly limited. For example, a powder of a metal oxide such as silica, alumina, titania, zirconia, ceria, zeolite, mordenite, silica-alumina, a metal silicate, or cordierite may be suitably used. These ceramic powders may be used either individually or in combination. The catalyst can be supported on the partition wall of the honeycomb electrode by coating the partition wall of the honeycomb electrode with the catalyst-coated particles.

The average particle diameter of the powder is preferably 0.01 to 50 µm, and more preferably 0.1 to 20 µm. If the average particle diameter of the powder is less than 0.01 µm, the catalyst may not be sufficiently supported on the surface of the carrier particles. If the average particle diameter of the powder is more than 50 µm, the catalyst-coated particles may be easily removed from the honeycomb electrode.

The mass ratio of the catalyst with respect to the carrier particle is preferably 0.1 to 20 mass%, and more preferably 1 to 10 mass%. If the mass ratio of the catalyst is less than 0.1 mass%, the reforming reaction may hardly proceed. If the mass ratio of the catalyst exceeds 20 mass%, the catalyst components may aggregate without being uniformly dispersed, so that the catalyst may not be uniformly supported on the carrier particles. Therefore, even if the catalyst is added in an amount of more than 20 mass%, a catalyst addition effect corresponding to the amount may not be achieved so that the reforming reaction may not be promoted.

The catalyst-coated particles may be obtained by impregnating the ceramic powder (carrier particles) with an aqueous solution containing the catalyst component, and drying and firing the resulting product. The catalyst can be supported on the partition wall of the honeycomb electrode by adding a dispersion medium (e.g., water) and additives to the catalyst-coated particles to prepare a coating liquid (slurry), and coating the partition wall of the honeycomb electrode with the slurry.

### [3-5] Reaction container:

The plasma reactor according to the present invention includes the reaction container 10 that has the inlet 4 for the reforming target gas 2 and the outlet 8 for the reformed gas 6, as shown in FIG. 1. It is necessary for the reaction container to be hollow so that gas can pass through. The shape of the reaction container is not particularly limited as long as the reaction container is hollow. For example, the reaction container may have a cylindrical shape, a rectangular cylindrical shape, or the like. The maximum inner diameter of the reaction container is not particularly limited. The size of the reaction container may be appropriately determined depending on the application of the plasma reactor.

The material for the reaction container is not particularly limited. It is preferable to form the reaction container using a metal (e.g., stainless steel) having excellent workability. It is preferable that the electrode installation section, etc., inside the reaction container be formed of an insulating material (e.g., honeycomb electrode support) from the viewpoint of preventing a short circuit.

### [3-6] Blocking member:

It is preferable that the plasma reactor according to the present invention further include a blocking member 40 that is formed of an insulating material and blocks the inflow of the reforming target gas 2 that has passed through an area other than the plasma generation area like the plasma reactor 1E shown in FIG. 5, the blocking member 40 preferably protruding into the space between the opposite electrode 12a and the honeycomb electrode 12b so that the outer circumferential area of the gas-introducing end face of the honeycomb electrode 12b is covered.

The blocking member 40 allows the reforming target gas 2 that has been activated (or partially reacted) in the plasma generation area to preferentially flow into the cells of the honeycomb electrode 12b. The reaction efficiency of the reforming reaction can be improved by allowing the reforming target gas that has been activated (or partially reacted) in the plasma generation area to preferentially flow into the cells of the honeycomb electrode using the blocking member.

As shown in FIG. 5, the blocking member 40 is disposed between the opposite electrode 12a and the honeycomb electrode 12b that generate plasma in order to block the inflow of the reforming target gas 2 that has passed through an area other than the plasma generation area. The open area of the blocking member 40 is preferably 80 to 200 mm², and more preferably 90 to 150 mm², in order to prevent an increase in pressure loss while blocking the inflow of the reforming target gas 2 that has passed through an area other than the plasma generation area. If the open area is less than 80 mm², the reforming target gas that has passed through the plasma generation area may not flow into the honeycomb electrode. Moreover, a pressure loss may increase. If the open area is more than 200 mm², the inflow of the reforming target gas that has passed through an area other than the plasma generation area may not be sufficiently blocked, so that the reaction efficiency of the reforming reaction may decrease.

The shape of the blocking member is not particularly limited insofar as the inflow of the reforming target gas that has passed through an area other than the plasma generation area into the cells of the honeycomb electrode can be suppressed. For example, the blocking member 40 shown in FIG. 5 has a circular opening 42 at the center thereof. Note that the opening may have a rectangular shape or the like other than a circular shape.

The blocking member is formed of an insulating material. The insulating ceramic (e.g., alumina) illustrated in connection with the insulating member may be suitably used as the insulating material. Note that another insulating material such as a metal (e.g., alumite) on which an oxide film is formed by an anodizing process (anodic oxidation process) may also be used.

### [3-7] Pulse power supply:

As shown in FIG. 1, the plasma reactor according to the present invention includes the pulse power supply 14 that applies a voltage between the pair of electrodes 12 (opposite electrode 12a and honeycomb electrode 12b). The pulse power supply is a power supply that can periodically apply a voltage. It is preferable to use a pulse power supply that can supply (a) a pulse waveform having a peak voltage of 1 kV or more and a pulse number per second of 1 or more, (b) an AC voltage waveform having a peak voltage of 1 kV or more and a frequency of 1 or more, (c) a DC waveform having a voltage of 1 kV or more, or (d) a voltage waveform formed by superimposing two or more of these waveforms. It is more preferable to use a pulse power supply having a peak voltage of 1 to 20 kV, and more preferably 5 to 10 kV.

Examples of such a pulse power supply include a high-voltage pulse power supply that uses a static induction thyristor (SI thyristor) or a MOS-FET as a switching element, and the like. It is preferable to use a high-voltage pulse power supply (e.g., manufactured by NGK Insulators, Ltd.) that uses an SI thyristor as a switching element since such a high-voltage pulse power supply can be used under various conditions. Note that the term "MOS-FET" refers to a field effect transistor (FET) in which the gate electrode has a three-layer metal-semiconducting oxide-semiconductor structure.

### [4] Production method:

The plasma reactor according to the present invention may be produced as follows, for example. A honeycomb structure that forms the honeycomb electrode is obtained by well known extrusion forming method. Specifically, a ceramic powder-containing kneaded clay is extruded into a desired shape, dried, and fired to obtain a honeycomb structure that forms the honeycomb electrode. A conductive material such as silicon carbide is used as the ceramic raw material for producing the honeycomb structure. In the first embodiment, a concave surface is formed by machining either or both end faces of the honeycomb structure, for example.

A catalyst is supported on the partition wall of the honeycomb structure thus obtained. A ceramic powder (carrier particles) is impregnated with an aqueous solution containing a catalyst component, dried, and fired to obtain catalyst-coated particles. A dispersion medium (e.g., water) and additives are added to the catalyst-coated particles to prepare a coating liquid (slurry). The slurry is applied to the partition wall of the honeycomb structure, dried, and fired so that the catalyst is supported on the partition wall of the honeycomb structure.

The honeycomb structure (honeycomb electrode) thus obtained is disposed in the inner space of the reaction container through an insulating member that is formed of an insulating material (e.g., alumina). The honeycomb electrode is disposed at a given distance from the opposite electrode.

The reaction container is formed in the shape of a tube by well known metal working process. It is preferable to use a metal material (e.g., stainless) that can be easily worked as the metal material for the reaction container.

In the second embodiment, the honeycomb electrode is disposed in the reaction container after wrapping a sheet-like conductive member around the outer circumferential surface of the honeycomb electrode so as to come in contact with the outer circumferential surface of the honeycomb electrode. In this case, it is also preferable to wrap a ceramic mat as an insulating member around the honeycomb electrode covered with the sheet-like conductive member, and then dispose the honeycomb electrode in the reaction container.

The honeycomb electrode and the opposite electrode are then electrically connected to a pulse power supply to produce a plasma reactor.

### [5] Application:

The plasma reactor according to the present invention may be suitably used for a reforming reaction, particularly a reforming reaction of reforming target gas such as hydrocarbons or alcohols to obtain a hydrogen-containing reformed gas. The plasma reactor may also be used for combustion control, exhaust gas post-treatment, catalyst regeneration, catalyst light off, and the like. The plasma reactor may also be used as an ozonizer. In this case, air or oxygen is introduced into the plasma reactor instead of the reforming target gas, and a plasma discharge is caused to occur so that electrons with high energy collide with oxygen to produce ozone (O₃). In recent years, automotive exhaust gas purification that utilizes the high oxidizing power of ozone has been studied, for example.

Examples of the hydrocarbons include light hydrocarbons such as methane, propane, butane, heptane, and hexane; petroleum hydrocarbons such as isooctane and pentadecane; and petroleum products (e.g., gasoline, kerosene, naphtha, and light oil) containing petroleum hydrocarbons and the like. Examples of the alcohols include methanol, ethanol, 1-propanol, 2-propanol, 1-butanol, and the like. These reforming target gases may be used individually or in combination.

The reforming method is not particularly limited. For example, partial reforming that utilizes oxygen, steam reforming that utilizes water, autothermal reforming that utilizes oxygen and water, or the like may be used.

A reforming reaction occurs when introducing the reforming target gas into the inner space of the reaction container of the plasma reactor according to the present invention, and applying a pulse voltage having a voltage waveform selected from (a) a pulse waveform having a peak voltage of 1 kV or more and a pulse number per second of 1 or more, (b) an AC voltage waveform having a peak voltage of 1 kV or more and a frequency of 1 or more, (c) a DC waveform having a voltage of 1 kV or more, or (d) a voltage waveform formed by superimposing two or more of these waveforms, between the electrodes using the pulse power supply.

### [Examples]

The plasma reactor according to the present invention is further described below taking plasma reactors 1A to 1J shown in FIGS. 1 to 10 as examples. Note that the plasma reactor according to the present invention encompasses a wide range of plasma reactors that include matters that specify the present invention, and is not limited to the following examples.

### [Production of plasma reactor]

A plasma reactor was produced as follows.

### (Example 1)

A plasma reactor 1A shown in FIG. 1 was produced. A stainless steel cylindrical body having an inner diameter of 38 mm, a thickness of 3 mm, and a length of 100 mm was used as a reaction container 10. A honeycomb electrode 12b wrapped with an insulating member 36A, and an opposite electrode 12a were disposed in the inner space of the reaction container 10.

A honeycomb structure formed of silicon carbide (content: 75 mass%) and including a plurality of cells defined by a partition wall and serving as a gas passage was used as the honeycomb electrode 12b. The honeycomb structure was obtained by cutting a silicon carbide diesel particulate filter ("SiC-DPF" manufactured by NGK Insulators, Ltd.) for trapping particulate matter contained in engine exhaust gas or the like.

The honeycomb structure had a cylindrical shape, a square cell shape, a cell density of 46 cells/cm², an outer diameter of 30 mm, and a length (length in the gas flow direction) of 30 mm. A rectangular parallelepiped sample (length: 2.5 cm, cross-sectional area: 12.3 cm² (cross-sectional area along the direction perpendicular to the gas flow direction)) was obtained by cutting the diesel particulate filter "SiC-DPF" along the gas flow direction. The electrical resistance of the sample measured by a constant-current four-terminal method using a direct-current power supply at a temperature of 180°C and a voltage terminal distance of 2.5 cm was 0.2 Ω. The thermal conductivity of the sample was 100 W/mK.

A concave surface 30A was formed in the end face of the honeycomb electrode 12b. The concave surface 30A was formed over the entire end face of the honeycomb electrode 12b. The concave surface 30A had a maximum depth of 5 mm and a curvature of R15.

A catalyst was supported on the honeycomb structure. The catalyst was supported by the following method. An alumina powder (specific surface area: 107 m²/g) (carrier fine particles) was impregnated with a rhodium nitrate (Rh(NO₃)₃) aqueous solution containing rhodium (catalyst component), dried at 120°C, and fired at 550°C for three hours in air to obtain catalyst-coated particles. The mass ratio of rhodium with respect to alumina was 0.5 mass%.

After the addition of a dispersion medium (water) and an alumina sol to the catalyst-coated particles, the pH of the mixture was adjusted to 4 using a nitric acid aqueous solution to obtain a coating liquid (slurry). The honeycomb electrode was impregnated with the slurry (i.e., the partition wall was coated with the slurry), dried at 120°C, and fired at 550°C for one hour in a nitrogen atmosphere. The catalyst was thus supported on the partition wall of the honeycomb electrode. The amount of rhodium supported on the honeycomb electrode was 1.0 g/l.

A ceramic mat formed by tangling alumina fibers and having a thickness of 5 mm and a basis weight of 100 g/m² was used as the insulating member 36A.

A mushroom-shaped electrode that was formed of silicon carbide which was the same material as that of the honeycomb electrode 12b and had a cap having an outer diameter larger than that of the stalk at the end of the stalk was used as the opposite electrode 12a. Specifically, the total length from the end of the stalk to the end of the cap was 12 mm, the maximum outer diameter of the cap was 6 mm, the outer diameter of the stalk was 3 mm, and the length of the stalk was 9mm. The honeycomb electrode 12b was disposed at an electrode-to-electrode distance of 5 mm from the opposite electrode 12a. The opposite electrode 12a of the plasma reactor 1A was used as a positive electrode.

A high-voltage pulse power supply (manufactured by NGK Insulators, Ltd.) that utilizes an SI thyristor as a switching element was used as a pulse power supply 14. The pulse power supply 14 was electrically connected to the opposite electrode 12a (positive electrode) and the honeycomb electrode 12b (negative electrode).

### (Example 2)

A plasma reactor 1B shown in FIG. 2 was produced. The plasma reactor 1B was produced in the same manner as the plasma reactor of Example 1, except for changing the shape of a concave surface 30B formed in the end face of the honeycomb electrode 12b. An area having a width of 5 mm from the outer edge of the end face of the honeycomb electrode 12b was flat, and the concave surface 30B was formed only inside that area. The concave surface 30B had a maximum depth of 5 mm and a curvature of R10.

### (Example 3)

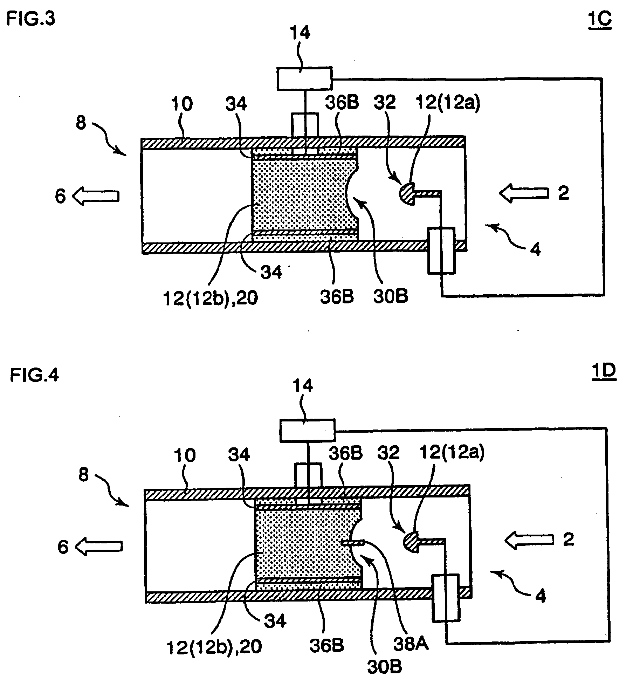

A plasma reactor 1C shown in FIG. 3 was produced. The plasma reactor 1C was produced in the same manner as the plasma reactor of Example 2, except for wrapping the entire outer circumferential surface of the honeycomb electrode 12b with a sheet-like conductive member 34, and wrapping the sheet-like conductive member 34 with an insulating member 36B.

A copper tape having a thickness of 0.5 mm was used as the sheet-like conductive member 34. A ceramic mat similar to that used in Example 2 was used as the insulating member 36B.

### (Example 4)

A plasma reactor 1D shown in FIG. 4 was produced. The plasma reactor 1D was produced in the same manner as the plasma reactor of Example 3, except for embedding an auxiliary electrode 38A in one end face (concave surface 30B) of the honeycomb electrode 12b.

A rod-like body formed of a nickel base alloy ("Inconel" manufactured by Nilaco Corporation) and having a length of 5 mm and a diameter of 4.0 mm was used as the auxiliary electrode. The rod-like body was disposed to protrude from the end face (concave surface 30B) of the honeycomb electrode 12b by 5 mm.

### (Example 5)

A plasma reactor 1E shown in FIG. 5 was produced. The plasma reactor 1E was produced in the same manner as the plasma reactor of Example 4, except for disposing a blocking member 40 in the space between the honeycomb electrode 12b and the opposite electrode 12a.

An alumina sheet having a thickness of 5 mm and having a circular opening (diameter: 11 mm, open area: 95 mm²) at the center thereof was used as the blocking member 40.

### (Example 6)

A plasma reactor 1F shown in FIG. 6 was produced. The plasma reactor 1E was produced in the same manner as the plasma reactor of Example 5, except for disposing a pair of electrodes 12a and 12c on either side of the honeycomb electrode 12b as one of the pair of electrodes 12, changing the length of the reaction container 10 to 150 mm, and disposing the auxiliary electrode 38B penetrating the honeycomb electrode 12b so that the end thereof protruded from each end face of the honeycomb electrode 12b.

The opposite electrodes 12a and 12c were disposed at an electrode-to-electrode distance of 5 mm from the honeycomb electrode 12b. The opposite electrodes 12a and 12c of the plasma reactor 1E were used as a positive electrode. A rod-like body formed of a nickel base alloy and having a length of 30 mm and a diameter of 3 mm was used as the auxiliary electrode. The rod-like body was disposed to protrude from the end face (concave surface 30B) of the honeycomb electrode 12b by 5 mm.

### (Comparative Example 1)

A plasma reactor 100A shown in FIG. 11 was produced. The plasma reactor 100A was produced in the same manner as the plasma reactor of Example 1, except that a concave surface was not formed in the end face of the honeycomb electrode 12b, and a rod-like electrode was used as the opposite electrode 12a.

A rod-like body formed of a nickel base alloy and having a length of 17.8 mm and a diameter of 4.0 mm was used as the rod-like electrode (opposite electrode 12a).

### (Example 7)

A plasma reactor 1G shown in FIG. 7 was produced. The plasma reactor 1G was produced in the same manner as the plasma reactor of Example 3, except that a concave surface was not formed in the end face of the honeycomb electrode 12b, and a rod-like electrode was used as the opposite electrode 12a.

### (Example 8)

A plasma reactor 1H shown in FIG. 8 was produced. The plasma reactor 1H was produced in the same manner as the plasma reactor of Example 7, except for embedding an auxiliary electrode 38A in one end face of the honeycomb electrode 12b.

A rod-like body formed of a nickel base alloy and having a length of 10 mm and a diameter of 3 mm was used as the auxiliary electrode. The rod-like body was disposed to protrude from the end face of the honeycomb electrode 12b by 5 mm.

### (Example 9)

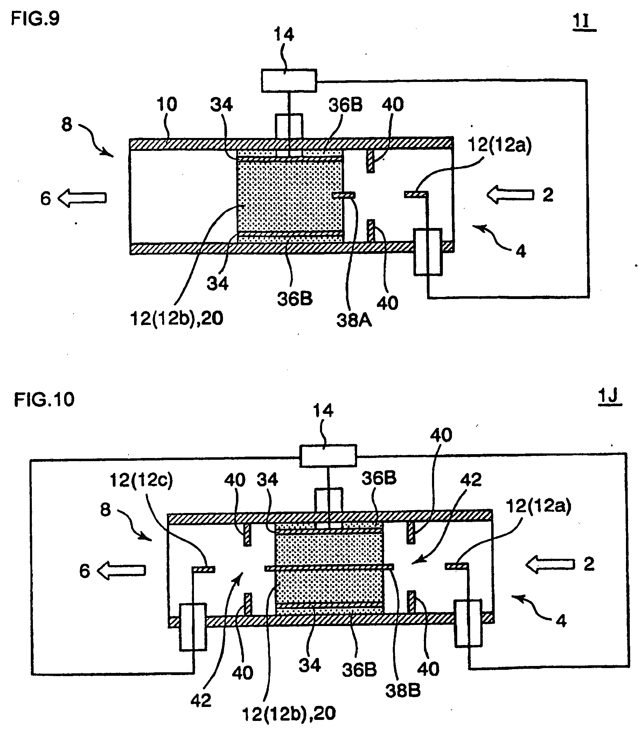

A plasma reactor 1I shown in FIG. 9 was produced. The plasma reactor 1I was produced in the same manner as the plasma reactor of Example 8, except for disposing a blocking member 40 in the space between the honeycomb electrode 12b and the opposite electrode 12a. An alumina sheet similar to that used in Example 5 was used as the blocking member 40.

### (Example 10)

A plasma reactor 1J shown in FIG. 6 was produced. The plasma reactor 1J was produced in the same manner as the plasma reactor of Example 9, except for disposing a pair of electrodes 12a and 12c on either side of the honeycomb electrode 12b as one of the pair of electrodes 12, changing the length of the reaction container 10 to 150 mm, and disposing the auxiliary electrode 38B through the honeycomb electrode 12b so that the end thereof protruded from each end face of the honeycomb electrode 12b.

The opposite electrodes 12a and 12c were disposed at an electrode-to-electrode distance of 5 mm from the honeycomb electrode 12b. The opposite electrodes 12a and 12c of the plasma reactor 1J were used as a positive electrode. A rod-like body formed of a nickel alloy and having a length of 40 mm and a diameter of 3 mm was used as the auxiliary electrode. The rod-like body was disposed to protrude from the end face of the honeycomb electrode 12b by 5 mm.

### [Light oil reforming test]

A light oil reforming test was performed using the plasma reactors of Examples 1 to 10 and Comparative Example 1. Specifically, light oil was subjected to a partial oxidation reaction. Light oil having a density of 0.8 g/cm³ and a cetane number of 57 was used.

A reforming target gas contained 10,000 ppm of light oil and 16,000 ppm of oxygen, with the balance being nitrogen gas. The reforming target gas was prepared by injecting a given amount of light oil (liquid) that had been vaporized using an evaporator into nitrogen gas that was heated to 250°C. The light oil was injected using a high-pressure microfeeder ("JP-H" manufactured by Furue Science K.K.).

The reforming target gas was supplied to the plasma reactor, and subjected to a partial oxidation reaction. A pulse voltage was applied between the pair of electrodes from the pulse power supply in a cycle of 3 kHz at a peak voltage of 5 kV. The amount of power supplied was 50 W. The space velocity (SV) of the reforming target gas in the reaction container was adjusted to 80,000 h⁻¹.

The hydrogen content in the reformed gas obtained by the reforming reaction was measured. The hydrogen content was measured using a gas chromatograph ("GC3200" manufactured by GL Sciences) provided with a thermal conductivity detector (TCD). Hydrogen gas having a known concentration was used as reference gas, and argon gas was used as carrier gas. When using gas chromatography, the peak area corresponding to hydrogen increased in proportion to the concentration of hydrogen. Therefore, the hydrogen content in the reformed gas can be measured by comparing the peak area corresponding to hydrogen with the peak area corresponding to hydrogen at a known concentration.

The hydrogen production rate was calculated by the following expression (1). The light oil was estimated as pentadecane (C₁₅H₃₂). The results are shown in Table 1. Hydrogen production rate (mass%) = hydrogen content in reformed gas / amount of hydrogen produced by reforming the entire injected light oil (C₁₅H₃₂) × 100 (1)

The hydrogen production rate was evaluated based on the hydrogen production rate when 3 minutes had elapsed after starting the reforming test. A case where the hydrogen production rate was 60% or more was evaluated as "Excellent (A) ", a case where the hydrogen production rate was 30% or more and less than 60% was evaluated as "Good (B)", and a case where the hydrogen production rate was less than 30% was evaluated as "Bad (C)".

The durability of the plasma reactor was evaluated based on the difference between the hydrogen production rate when 3 minutes had elapsed after starting the reforming test and the hydrogen production rate when 10 minutes had elapsed after starting the reforming test. A case where the difference in hydrogen production rate was 5% or less was evaluated as "Excellent (A)", a case where the difference in hydrogen production rate was more than 5% and 10% or less was evaluated as "Good (B)", and a case where the difference in hydrogen production rate was more than 10% was evaluated as "Bad (C)".

Noise due to a plasma discharge was evaluated as follows. A chromatogram data processor ("Chromatocorder 21" manufactured by System Instruments Co., Ltd.) that was connected to a 100 V power supply and turned ON was disposed at a position away from the plasma reactor by 50 cm, and whether or not malfunction of the printer of the chromatogram data processor occurred due to a plasma discharge was checked. A case where malfunction of the printer did not occur was evaluated as "Excellent (A)", a case where malfunction of the printer occurred once was evaluated as "Good (B)", a case where malfunction of the printer occurred twice or more at an interval of 120 seconds or more was evaluated as "Fair (C)", and a case where malfunction of the printer occurred successively during the test was evaluated as "Bad (D)".

**[Table 1]**

| | | Example 1 | Example 2 | Example 3 | Example 4 | Example 5 | Example 6 | Comparative Example 1 |
|---|---|---|---|---|---|---|---|---|
| Honeycomb electrode | Concave surface formation position | One end face | One end face | One end face | One end face | One end face | Each end face | - |
| | Concave surface formation area | Entire end face | Center of end face | Center of end face | Center of end face | Center of end face | Center of end face | - |
| Auxiliary electrode | Presence/ absence | - | - | - | Present | Present | Present | - |
| | Position | - | - | - | One end face | One end face | Each end face | - |
| Sheet-like conductive member | Presence/ absence | - | - | Present | Present | Present | Present | - |
| | Material/ form | - | - | Cu/tape | Cu/tape | Cu/tape | Cu/tape | - |
| Opposite electrode | Installat ion method | Opposite to one end face | Opposite to one end face | Opposite to one end face | Opposite to one end face | Opposite to one end face | Opposite to each end face | Opposite to one end face |
| | End face shape | Convex surface | Convex surface | Convex surface | Convex surface | Convex surface | Convex surface | Flat |
| Blocking member | Presence/ absence | - | - | - | - | Present | Present | - |
| H₂ production rate (%) | After 3 min | 60 | 62 | 65 | 64 | 70 | 76 | 49 |
| | After 10 min | 53 | 58 | 61 | 63 | 69 | 74 | 33 |
| H₂ production rate evaluation | | A | A | A | A | A | A | B |
| Durability evaluation | | B | A | A | A | A | A | C |
| Noise evaluation | | C | B | A | A | A | A | D |

**[Table 2]**

| | | Example 7 | Example 8 | Example 9 | Example 10 | Comparative Example 1 |
|---|---|---|---|---|---|---|
| Honeycomb electrode | Concave surface formation position | - | - | - | - | - |
| | Concave surface formation area | - | - | - | - | - |
| Auxiliary electrode | Presence/ absence | - | Present | Present | Present | - |
| | Position | - | One end face | One end face | Each end face | - |
| Sheet-like conductive member | Presence/ absence | Present | Present | Present | Present | - |
| | Material/ form | Cu/tape | Cu/tape | Cu/tape | Cu/tape | - |
| Opposite electrode | Installat ion method | Opposite to one end face | Opposite to one end face | Opposite to one end face | Opposite to each end face | Opposite to one end face |
| | End face shape | Flat | Flat | Flat | Flat | Flat |
| Blocking member | Presence/ absence | - | - | Present | Present | - |
| H₂ production rate (%) | After 3 min | 55 | 56 | 61 | 70 | 49 |
| | After 10 min | 48 | 54 | 58 | 67 | 33 |
| H₂ production rate evaluation | | B | B | A | A | B |
| Durability evaluation | | B | A | A | A | C |
| Noise evaluation | | C | B | B | B | D |

### (Evaluation)

From the comparison between Example 1 and Comparative Example 1, it was found that the hydrogen production rate was improved while suppressing electrical noise due to plasma generation by forming the concave surface in the end face of the honeycomb electrode. This is considered to be because the ratio of the reforming target gas passing through the plasma generation area increased due to an increase in plasma discharge area so that the reforming reaction was promoted.

From the comparison between Example 1 and Comparative Example 2, it was found that the hydrogen production rate was improved while suppressing electrical noise due to plasma generation by forming the concave surface in the center area of the end face of the honeycomb electrode instead of the entire end face of the honeycomb electrode. In particular, a significant difference was observed with regard to the effect of suppressing electrical noise. This is considered to be because the edge effect in the outer edge area of the end face of the honeycomb electrode was suppressed by forming the peripheral area of the honeycomb electrode to have a flat shape, so that local concentration of a plasma discharge in the outer edge area of the end face of the honeycomb electrode was suppressed.

From the comparison between Example 2 and Example 3 or the comparison between Example 7 and Comparative Example 1, it was found that the hydrogen production rate was improved while suppressing electrical noise due to plasma generation by providing the sheet-like conductive member. In particular, a significant difference was observed with regard to the effect of suppressing electrical noise. This is considered to be because electrons uniformly flowed through the surface of the honeycomb electrode to prevent plasma concentration (i.e., plasma was stably generated) so that the reaction efficiency was improved.

From the comparison between Example 3 and Example 4 or the comparison between Example 7 and Example 8, it was found that the difference between the hydrogen production rate when 3 minutes had elapsed after starting the reaction and the hydrogen production rate when 10 minutes had elapsed after starting the reaction decreased (i.e., the durability of the honeycomb electrode increased) by providing the auxiliary electrode.

From the comparison between Example 4 and Example 5 or the comparison between Example 8 and Example 9, it was found that the hydrogen production rate was improved by providing the blocking member. This is considered to be because the ratio of the reforming target gas passing through the plasma generation area increased so that the reforming reaction was promoted.

From the comparison between Example 5 and Example 6 or the comparison between Example 9 and Example 10, it was found that the hydrogen yield was improved by disposing two opposite electrodes on either side of the honeycomb electrode as compared with the plasma reactor in which one opposite electrode was disposed. This is considered to be because the time in which the reforming target gas passed through the plasma space increased due to an increase in plasma space so that the reforming reaction was further promoted.

As is clear from the above results, a configuration (1) in which the concave surface was formed in the end face of the honeycomb electrode or a configuration (2) in which the sheet-like conductive member was provided around the outer circumferential surface of the honeycomb electrode improved the hydrogen production rate while suppressing electrical noise due to plasma generation. Further improved results were obtained by combining these configurations.

Further improved results were obtained by combining the configuration (1) and/or the configuration (2) with a configuration (3) in which an electrode formed of a conductive ceramic and having a convex surface at the end was used as the opposite electrode, a configuration (4) in which the auxiliary electrode was provided at the center of the end face of the honeycomb electrode, or a configuration (5) in which the blocking member was provided.

Although the above examples illustrate an example of a partial oxidation reaction, a high hydrogen production rate was achieved as compared with a known plasma reactor by steam reforming utilizing water, autothermal reforming utilizing oxygen and water, and the like. Specifically, the plasma reactor according to the present invention may be applied to various reforming methods.

The plasma reactor according to the present invention may be suitably used for a reforming reaction of hydrocarbon compounds or alcohols, and may be particularly suitably used for a hydrogen production reaction. Since the plasma reactor according to the present invention can stably supply a large amount of reformed gas for a long time, the plasma reactor according to the present invention may also be suitably used for applications such as an on-vehicle fuel reformer.

## Claims

1. A plasma reactor comprising a reaction container (10) that has an inlet (4) for a reforming target gas (2) and an outlet (8) for a reformed gas (6), a pair of electrodes (12) that generate plasma and are disposed opposite to each other in an inner space of the reaction container, a pulse power supply (14) that applies a voltage between the pair of electrodes (12), and a catalyst that promotes a reforming reaction of the reforming target gas,
one of the pair of electrodes being a honeycomb electrode (12b) that is formed of a conductive ceramic and includes a plurality of cells that are defined by a partition wall and serve as a gas passage;
the other of the pair of electrodes being an opposite electrode (12a) that is disposed opposite to an end face of the honeycomb electrode (12b);
the catalyst being supported on the partition wall of the honeycomb electrode (12b); and
a concave surface (30A, 30B) being formed in a center area of the end face of the honeycomb electrode (12b) that is opposite to the opposite electrode (12a).

2. The plasma reactor according to claim 1, wherein a peripheral area of the end face of the honeycomb electrode that is opposite to the opposite electrode is formed tabularly, and the concave surface is formed in the center area of the end face of the honeycomb electrode.

3. The plasma reactor according to claim 1 or 2, wherein the opposite electrode has a convex surface at an end thereof.

4. The plasma reactor according to claim 3, wherein the convex surface of the opposite electrode has the same curvature as that of the concave surface of the honeycomb electrode.

5. A plasma reactor comprising a reaction container (10) that has an inlet (4) for a reforming target gas (2) and an outlet (8) for a reformed gas (6), a pair of electrodes (12) that generate plasma and are disposed opposite to each other in an inner space of the reaction container, a pulse power supply (14) that applies a voltage between the pair of electrodes (12), and a catalyst that promotes a reforming reaction of the reforming target gas,
one of the pair of electrodes being a honeycomb electrode (12b) that is formed of a conductive ceramic and includes a plurality of cells that are defined by a partition wall and serve as a gas passage;
the other of the pair of electrodes being an opposite electrode (12a) that is disposed opposite to an end face of the honeycomb electrode;
the catalyst being supported on the partition wall of the
honeycomb electrode; and
the honeycomb electrode (12b) being electrically connected to the pulse power supply (14) through a sheet-like conductive member (34) that is formed of a metal and is disposed to come in contact with an outer circumferential surface of the honeycomb electrode (12b).

6. The plasma reactor according to claim 5, wherein the sheet-like conductive member is formed of Cu or a Cu alloy.

7. The plasma reactor according to any one of claims 1 to 6, wherein the opposite electrode is formed of a conductive ceramic.

8. The plasma reactor according to any one of claims 1 to 7, wherein the honeycomb electrode is provided with an auxiliary electrode that is formed of a metal or an alloy and protrudes from the center area of the end face of the honeycomb electrode opposite to the opposite electrode toward the opposite electrode, the auxiliary electrode being disposed so that part of the auxiliary electrode is embedded in the honeycomb electrode and a remainder of the auxiliary electrode protrudes from the end face of the honeycomb electrode.

9. The plasma reactor according to claim 8, comprising at least a pair of opposite electrodes that are disposed on either side of the honeycomb electrode as the opposite electrode, and at least a pair of auxiliary electrodes that respectively protrude toward a corresponding opposite electrode of the pair of opposite electrodes as the auxiliary electrode.

10. The plasma reactor according to claim 9, wherein the auxiliary electrode is disposed to pass through the honeycomb electrode so that each end of the auxiliary electrode protrudes respectively from each end face of the honeycomb electrode.

11. The plasma reactor according to any one of claims 1 to 10, further comprising a blocking member that is formed of an insulating material and blocks inflow of the reforming target gas that has passed through an area other than a plasma generation area, the blocking member protruding into a space between the opposite electrode and the honeycomb electrode so that an outer circumferential area of a gas-introducing end face of the honeycomb electrode is covered.

12. The plasma reactor according to claim 11, wherein the blocking member is formed of an insulating ceramic.

13. The plasma reactor according to any one of claims 1 to 12, wherein the honeycomb electrode is formed of a conductive ceramic that includes silicon carbide.

14. The plasma reactor according to any one of claims 1 to 13, wherein the pulse power supply is a high-voltage pulse power supply that utilizes a static induction thyristor.

## Patentansprüche

1. Plasmareaktor, der Folgendes umfasst: einen Reaktionsbehälter (10), welcher eine Eintrittsöffnung (4) für ein reformierendes Zielgas (3) und eine Austrittsöffnung (8) für ein reformiertes Gas (6) aufweist, ein Paar Elektroden (12), die Plasma erzeugen und einander gegenüberliegend im Innenraum des Reaktionsbehälters angeordnet sind, eine Impulsspannungsquelle (14), die eine Spannung zwischen den Paar-Elektroden (18) anlegt, und einen Katalysator, der eine Reformierungsreaktion des reformierenden Zielgases fördert,
wobei eine der Paar-Elektroden eine Wabenelektrode (12b) ist, die aus einer leitfähigen Keramik ausgebildet ist und eine Vielzahl von Zellen umfasst, welche durch eine Trennwand definiert sind und als Gasdurchgang dienen;
wobei die andere der Paar-Elektroden eine Gegenelektrode (12a) ist, die gegenüber einer Stirnfläche der Wabenelektrode (12b) angeordnet ist;
wobei der Katalysator auf der Trennwand der Wabenelektrode (12b) aufliegt;
und
wobei eine konkave Oberfläche (30A, 30B) im mittleren Bereich der Stirnfläche der Wabenelektrode (12b) ausgebildet ist, die der Gegenelektrode (12a) gegenüberliegt.

2. Plasmareaktor nach Anspruch 1, worin ein Randbereich der Stirnfläche der Wabenelektrode, die der Gegenelektrode gegenüberliegt, tafelförmig ausgebildet ist und die konkave Oberfläche im mittleren Bereich der Stirnfläche der Wabenelektrode ausgebildet ist.

3. Plasmareaktor nach Anspruch 1 oder 2, worin die Gegenelektrode an einem ihrer Enden eine konvexe Oberfläche aufweist.

4. Plasmareaktor nach Anspruch 3, worin die konvexe Oberfläche der Gegenelektrode die gleiche Krümmung aufweist wie die konkave Oberfläche der Wabenelektrode.

5. Plasmareaktor, der Folgendes umfasst: einen Reaktionsbehälter (10), welcher eine Eintrittsöffnung (4) für ein reformierendes Zielgas (3) und eine Austrittsöffnung (8) für ein reformiertes Gas (6) aufweist, ein Paar Elektroden (12), die Plasma erzeugen und einander gegenüber liegend im Innenraum des Reaktionsbehälters angeordnet sind, eine Impulsspannungsquelle (14), die eine Spannung zwischen den Paar-Elektroden (18) anlegt, und einen Katalysator, der eine Reformierungsreaktion des reformierenden Zielgases fördert,
wobei eine der Paar-Elektroden eine Wabenelektrode (12b) ist, die aus einer leitfähigen Keramik ausgebildet ist und eine Vielzahl von Zellen umfasst, welche durch eine Trennwand definiert sind und als Gasdurchgang dienen;
wobei die andere der Paar-Elektroden eine Gegenelektrode (12a) ist, die gegenüber einer Stirnfläche der Wabenelektrode (12b) angeordnet ist;
wobei der Katalysator auf der Trennwand der Wabenelektrode (12b) aufliegt;
und
wobei die Wabenelektrode (12b) mit der Impulsspannungsquelle (14) durch ein blattförmiges leitfähiges Element (34) elektrisch verbunden ist, das aus einem Metall ausgebildet und so angeordnet ist, dass es mit der äußeren Umfangsfläche der Wabenelektrode (12b) in Berührung kommt.

6. Plasmareaktor nach Anspruch 5, worin das blattartige leitfähige Element aus Cu oder einer Cu-Legierung ausgebildet ist.

7. Plasmareaktor nach einem der Ansprüche 1 bis 6, worin die Gegenelektrode aus einer leitfähigen Keramik ausgebildet ist.

8. Plasmareaktor nach einem der Ansprüche 1 bis 7, worin die Wabenelektrode mit einer Hilfselektrode ausgestattet ist, die aus einem Metall oder einer Legierung ausgebildet ist und von dem mittleren Bereich der Stirnfläche der Wabenelektrode gegenüber der Gegenelektrode in Richtung der Gegenelektrode ragt, wobei die Hilfselektrode so angeordnet ist, dass ein Teil der Hilfselektrode in der Wabenelektrode eingebettet ist und der Rest der Hilfselektrode von der Stirnfläche der Wabenelektrode hervorragt.

9. Plasmareaktor nach Anspruch 8, der zumindest ein Paar Gegenelektroden, die an je einer Seite der Wabenelektrode angeordnet sind, als Gegenelektrode und zumindest ein Paar Hilfselektroden, die jeweils in Richtung einer entsprechenden Gegenelektrode aus dem Paar Gegenelektroden ragen, als Hilfselektroden umfasst.

10. Plasmareaktor nach Anspruch 9, worin die Hilfselektrode angeordnet ist, um durch die Wabenelektrode hindurchzutreten, sodass jedes Ende der Hilfselektrode von jeder Stirnfläche der Wabenelektrode hervorragt.

11. Plasmareaktor nach einem der Ansprüche 1 bis 10, der ferner ein Blockadeelement umfasst, das aus einem isolierenden Material ausgebildet ist und die Einströmung des reformierenden Zielgases blockiert, das durch einen anderen Bereich als einen Plasmaerzeugungsbereich geströmt ist, wobei das Blockadeelement in einen Raum zwischen der Gegenelektrode und der Wabenelektrode ragt, sodass die äußere Umfangsfläche der Gas einführenden Stirnfläche der Wabenelektrode bedeckt ist.

12. Plasmareaktor nach Anspruch 11, worin das Blockadeelement aus einer isolierenden Keramik ausgebildet ist.

13. Plasmareaktor nach einem der Ansprüche 1 bis 12, worin die Wabenelektrode aus einer leitfähigen Keramik ausgebildet ist, die Siliciumcarbid umfasst.

14. Plasmareaktor nach einem der Ansprüche 1 bis 13, worin die Impulsspannungsquelle eine Hochspannungsimpulsspannungsquelle ist, die einen statischen Induktionsflussthyristor verwendet.

## Revendications

1. Réacteur à plasma comprenant un conteneur de réaction (10) qui comporte une entrée (4) pour un gaz cible de reformage (2) et une sortie (8) pour un gaz reformé (6), une paire d'électrodes (12) qui génèrent du plasma et qui sont disposées l'une en face de l'autre dans un espace intérieur du conteneur de réaction, une alimentation pulsée (14) qui applique une tension entre la paire d'électrodes (12), et un catalyseur qui favorise une réaction de reformage du gaz cible de reformage,
l'une de la paire d'électrodes étant une électrode en nid d'abeilles (12b) qui est constituée d'une céramique conductrice et qui comprend une pluralité de cellules qui sont définies par une paroi de séparation et qui servent de passage de gaz ;
l'autre de la paire d'électrodes étant une électrode opposée (12a) qui est disposée face à une face d'extrémité de l'électrode en nid d'abeilles (12b) ;
le catalyseur étant supporté sur la paroi de séparation de l'électrode en nid d'abeilles (12b) ; et
une surface concave (30A, 30B) étant formée dans une zone centrale de la face d'extrémité de l'électrode en nid d'abeilles (12b) qui est face à l'électrode opposée (12a).

2. Réacteur à plasma selon la revendication 1, dans lequel une zone périphérique de la face d'extrémité de l'électrode en nid d'abeilles qui est face à l'électrode opposée a une forme tabulaire, et la surface concave est formée dans la zone centrale de la face d'extrémité de l'électrode en nid d'abeilles.

3. Réacteur à plasma selon la revendication 1 ou 2, dans lequel l'électrode opposée a une surface convexe à une extrémité de celle-ci.

4. Réacteur à plasma selon la revendication 3, dans lequel la surface convexe de l'électrode opposée a la même courbure que celle de la surface concave de l'électrode en nid d'abeilles.

5. Réacteur à plasma comprenant un conteneur de réaction (10) qui comporte une entrée (4) pour un gaz cible de reformage (2) et une sortie (8) pour un gaz reformé (6), une paire d'électrodes (12) qui génèrent du plasma et qui sont disposées l'une en face de l'autre dans un espace intérieur du conteneur de réaction, une alimentation pulsée (14) qui applique une tension entre la paire d'électrodes (12), et un catalyseur qui favorise une réaction de reformage du gaz cible de reformage,
l'une de la paire d'électrodes étant une électrode en nid d'abeilles (12b) qui est constituée d'une céramique conductrice et qui comprend une pluralité de cellules qui sont définies par une paroi de séparation et qui servent de passage de gaz ;
l'autre de la paire d'électrodes étant une électrode opposée (12a) qui est disposée face à une face d'extrémité de l'électrode en nid d'abeilles ;
le catalyseur étant supporté sur la paroi de séparation de l'électrode en nid d'abeilles ; et
l'électrode en nid d'abeilles (12b) étant connectée électriquement à l'alimentation pulsée (14) par l'intermédiaire d'un élément conducteur similaire à une feuille (34) qui est constitué d'un métal et qui est disposé de manière à venir en contact avec une surface circonférentielle extérieure de l'électrode en nid d'abeilles (12b).

6. Réacteur à plasma selon la revendication 5, dans lequel l'élément conducteur similaire à une feuille est constitué de Cu ou d'un alliage de Cu.

7. Réacteur à plasma selon l'une quelconque des revendications 1 à 6, dans lequel l'électrode opposée est constituée d'une céramique conductrice.

8. Réacteur à plasma selon l'une quelconque des revendications 1 à 7, dans lequel l'électrode en nid d'abeilles est pourvue d'une électrode auxiliaire qui est constituée d'un métal ou d'un alliage et qui fait saillie de la zone centrale de la face d'extrémité de l'électrode en nid d'abeilles face à l'électrode opposée vers l'électrode opposée, l'électrode auxiliaire étant disposée de sorte qu'une partie de l'électrode auxiliaire soit logée dans l'électrode en nid d'abeilles et que le reste de l'électrode auxiliaire fasse saillie de la face d'extrémité de l'électrode en nid d'abeilles.

9. Réacteur à plasma selon la revendication 8, comprenant au moins une paire d'électrodes opposées qui sont disposées de chaque côté de l'électrode en nid d'abeilles en tant qu'électrode opposée, et au moins une paire d'électrodes auxiliaires qui font saillie respectivement vers une électrode opposée correspondante de la paire d'électrodes opposées en tant qu'électrode auxiliaire.

10. Réacteur à plasma selon la revendication 9, dans lequel l'électrode auxiliaire est disposée de manière à passer à travers l'électrode en nid d'abeilles de sorte que chaque extrémité de l'électrode auxiliaire fasse saillie respectivement de chaque face d'extrémité de l'électrode en nid d'abeilles.

11. Réacteur à plasma selon l'une quelconque des revendications 1 à 10, comprenant en outre un élément de blocage qui est constitué d'un matériau isolant et qui bloque un flux d'entrée du gaz cible de reformage qui est passé à travers une zone autre qu'une zone de génération de plasma, l'élément de blocage faisant saillie dans un espace entre l'électrode opposée et l'électrode en nid d'abeilles de sorte qu'une région circonférentielle extérieure d'une face d'extrémité d'introduction de gaz de l'électrode en nid d'abeilles soit recouverte.

12. Réacteur à plasma selon la revendication 11, dans lequel l'élément de blocage est constitué d'une céramique isolante.

13. Réacteur à plasma selon l'une quelconque des revendications 1 à 12, dans lequel l'électrode en nid d'abeilles est constituée d'une céramique conductrice qui comprend du carbure de silicium.

14. Réacteur à plasma selon l'une quelconque des revendications 1 à 13, dans lequel l'alimentation pulsée est une alimentation pulsée haute tension qui utilise un thyristor à induction statique.
